# EUROPEAN PATENT APPLICATION

(11) **EP 1 563 740 A1**
(43) Date of publication of application: **17.08.2005**
(21) Application number: 03772883.9
(22) Date of filing: 18.11.2003
(51) Int. Cl.: A23B 4/06

(54) **METHOD OF COOKING FOOD BY PREHEATING AND FOOD TO BE COOKED BY HEATING**

(30) Priority: 19.11.2002 JP 2002335348
(71) Applicant: Nakai, Ritsuko, Odawara-shi, Kanagawa 250-0012 (JP)
(72) Inventor: NAKAI, Toshio, Odawara-shi, Kanagawa 250-0012 (JP)
(74) Representative: Grünecker, Kinkeldey, Stockmair & Schwanhäusser Anwaltssozietät
(86) International application number: PCT/JP2003/014683
(87) International publication number: WO 2004/045294

(57) **Abstract**

For a foodstuff of which the main component is protein and which is to be refrigerated or chilled for storage, it is desired to improve it so that it can be cooked easily in a short time and is superior in flavors, tastes and hygiene. Before refrigerating grilled chicken on a stick as the foodstuff to be cooked by heating, it is preheated by passing electricity to a temperature not less than the temperature at which protein is denatured and less than the cooking temperature until its protein is uniformly denatured to the inside thereof so that simply by preheating at least its outside to a temperature not less than the cooking temperature during cooking by heating, tastes in which the entire grilled chicken is heated to the inside are obtainable and it can be cooked easily with no variation in a short time with excellent flavors and tastes.

## Description

### [Technical Field]

This invention relates to a method of cooking food by preheating and foodstuffs cooked by heating.

### [Back-ground Art]

Among foodstuff containing protein such as meats, fishes, eggs and their processed products, some are refrigerated or chilled raw and distributed, and others are cooked by heating and then refrigerated or chilled and distributed.

The former foodstuffs, i.e. ones distributed raw can be stored without losing their flavor and taste, but it takes a long time to heat such foodstuffs to inside thereof when cooking at home or restaurants, etc. Also, since it is difficult to determine whether protein in the foodstuff has sufficiently denatured, the inner part may remain raw when grilled or boiled. Further, since they are stored raw i.e. without heating, in the case of e.g. meat or fish pieces on a stick such as "yakitori", that is, grilled chicken on a stick, if they are contaminated with germs such as colon bacilli during processing, many of them may remain alive.

Foodstuffs that are distributed after cooking by heating can be served quickly by preheating them in e.g. a microwave oven. But since the time elapsed after cooking is long, flavors and tastes are inferior compared with ones that have just been cooked.

### [Disclosure of Invention]

An object of this invention is to improve a foodstuff to be cooked by heating, the main component of which is animal protein and which is to be refrigerated or chilled for storage so that it can be easily cooked in a short time while keeping flavors, tastes and hygiene.

According to this invention, there is provided a method of cooking food by preheating wherein a foodstuff for cooking by heating, the main component of which is animal protein and which is to be refrigerated or chilled, is preheated to a temperature range not less than the temperature at which protein is denatured and less than a cooking temperature before the foodstuff is refrigerated or chilled.

That is, by preheating a foodstuff of which the main component is animal protein to a temperature range not less than the temperature at which protein is denatured and less than the cooking temperature before refrigerated or chilled, tastes and flavors are obtained as if the entire foodstuff was cooked to the inside only by heating at least its outside to a temperature not less than the cooking temperature. Also, it can be easily cooked in a short time with no variation. With this method, since the foodstuff is cooked from the state immediately before being edible, excellent flavor and taste are retained. Also, since the foodstuff is preheated to denature the protein before storage, even with a foodstuff in which contamination with germs is concerned, live germs dramatically decrease and scarcely remain due to the sterilizing effect by preheating.

As the preheating means, flame heating, vapor heating, hot air heating, microwave heating, and electric heating may be used.

If the preheating means is electric heating in which electric current is passed through the foodstuff to heat it with Joule heat, since the entire foodstuff is uniformly heated with Joule heat, protein can be efficiently denatured to the inside of the food in a short time. As a method of electric heating, e.g. as described in JP patent publication 11-192060, a method may be used in which electric current is passed through a film of electrolyte formed around the food.

The temperature range for such preheating is not less than 30 °C and less than 135 °C, preferably not less than 50 °C and less than 80 °C.

If the foodstuff is to be refrigerated, by freezing it after preheating without going through pre-cooling, evaporation of water in the animal cells and leak of extracts are suppressed, so that the foodstuff is storaged with cellular water and extracts in the foodstuff retained rich. Thus, even after thawing and cooking, the foodstuff is rich in tasty gravy and juicy and full. Further, there is no fear of growth of live germs in the precooling step. This is hygienic.

The foodstuff to be cooked by heating of this invention, which is to be refrigerated or chilled for storage and of which the main component is animal protein, is preheated to a temperature not less than the temperature at which protein is denatured and less than the cooking temperature before refrigerated or chilled.

As described above, in the method of cooking food by preheating according to this invention, before refrigerating or chilling, a foodstuff for cooking by heating whose main component is animal protein is preheated to a temperature not less than the protein denatured temperature and less than the cooking temperature to denature the protein to the inside so that when cooking by heating, tastes and flavors as if the foodstuff was cooked to the inside will be obtained simply by heating at least its outer portion to the cooking temperature or higher. Thus, it can be cooked in a short time with no variation. Tastes and flavors of the foodstuff are excellent. Also, since the foodstuff is preheated to denature the protein before storage, even with a foodstuff in which contamination with germs is concerned, due to the sterilizing effect by preheating, live germs dramatically decrease and scarcely remain.

As the means of preheating, by using electric heating in which current is passed through the foodstuff to heat it with Joule heat, the entire foodstuff is heated uniformly by Joule heat. Thus protein can be denatured efficiently to the inside in a short time.

If the foodstuff is to be refrigerated, by freezing it after preheating without going through pre-cooling, evaporation of water in the animal cells and leak of extracts are suppressed, so that the foodstuff is storaged with cellular water and extracts in the foodstuff retained rich. Thus, even after thawing and cooking, the foodstuff is rich in tasty gravy and juicy and full. Further, there is no fear of growth of live germs in the precooling step. This is hygienic.

The food for cooking by preheating of this invention has as main component animal protein and is adapted to be refrigerated or chilled. Since it is preheated to a temperature which is not less than the protein denatured temperature and less than the cooking temperature, anyone can easily cook it in a short time with no variation, and its flavors and tastes are excellent. Also, it can be distributed hygienically with live germs scarcely remaining.

### [Brief Description of Drawings]

Fig. 1 is a diagram showing the steps of manufacturing grilled chicken to be refrigerated for storage according to the preheating cooking method of foodstuffs of this invention; and
Fig. 2 is a partially cutaway front view showing an electric heating device used in the preheating step of Fig. 1.

### [Best Mode for Embodying the Invention]

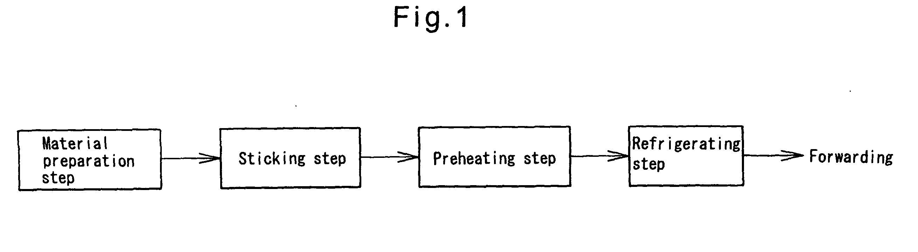

Below, with reference to the drawings, the embodiment of this invention is described. Fig. 1 shows the steps of preparing grilled chicken on a stick or "yakitori" to be refrigerated for storage for which the preheating cooking method for foodstuffs according to the present invention is employed. First in the material preparation step, chicken pieces as the material for yakitori are prepared. In the sticking step, a predetermined number of chicken pieces are put on each stick. In the preheating step, the chicken pieces on the sticks are heated to a temperature in the range of 50 °C to 80 °C so that the protein will be denatured to the inside until the red meat turns white. Immediately thereafter, they are fed to the refrigerating step and refrigerated to a temperature of -18 °C or under. The refrigerated "yakitori" is shipped to groceries, yakitori stands, etc.

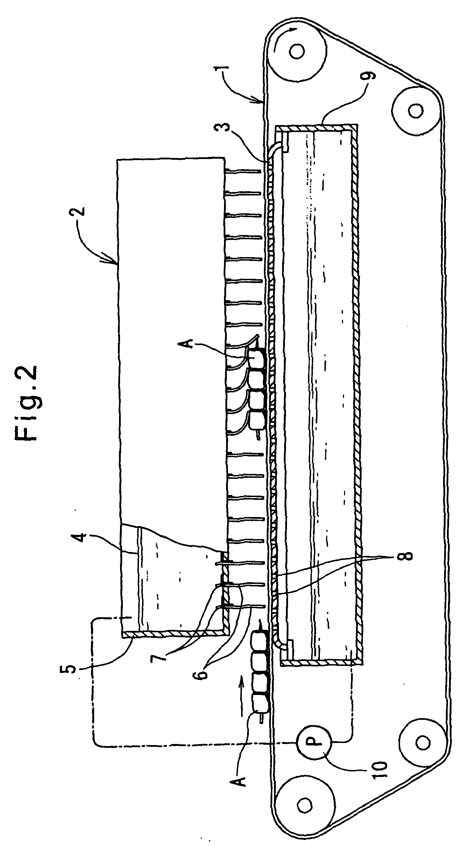

Fig. 2 shows an electric heating device used in the preheating step. The electric heating device comprises a conveyor 1 for transporting yakitori A on sticks, and an upper current-carrying portion 2 and a lower electrode 3, which are arranged so as to sandwich the transporting surface of the conveyor 1. An electrolyte 4 such as salt water is dropped from the current-carrying portion 2 to form a film of electrolyte 4 on the surface of the yakitori A on the conveyor 1. Electric current is then passed through the film of electrolyte 4 by the current-carrying portion 2 and the electrode 3 to uniformly heat the entire yakitori A with Joule heat.

Flexible brushes 6 hang from slits 7 formed in the bottom of a supply tank 5 in which is stored the electrolyte 4 so as to flexibly touch the yakitori A being transported on the conveyor 1. The electrolyte 4 in the supply tank 5 flows down along the brushes 6, forming the film on the surface of the yakitori A. Also, a multiplicity of through-holes 8 are formed in the electrode 3 so that any excess electrolyte 4 will be collected in a lower storage tank 9. The electrolyte 4 that has been collected in the storage tank 9 is returned to the supply tank 5 by a pump 10.

In the embodiment, the present invention is applied to grilled chicken to be refrigerated. But the method according to the present invention is applicable to any food for cooking by heating whose main component is animal protein and which is supposed to be refrigerated or chilled, such as meats other than chicken, fishes, eggs and processed foods such as hamburg steak.

## Claims

1. A method of cooking food by preheating wherein a foodstuff for cooking by heating, the main component of which is animal protein and which is to be refrigerated or chilled, is preheated to a temperature not less than the temperature at which protein is denatured and less than a cooking temperature before said foodstuff is refrigerated or chilled.

2. A method of cooking food by preheating as claimed in claim 1 wherein means for said preheating is electric heating in which said foodstuff is heated by passing an electric current to heat it with Joule heat.

3. A method of cooking food by preheating as claimed in claim 1 or 2 wherein the temperature for said preheating is not less than 30 °C and less than 135 °C.

4. A method of cooking food by preheating as claimed in any of claims 1-3 wherein said foodstuff is refrigerated after said preheating without going through a precooling step.

5. A foodstuff to be cooked by heating, said foodstuff having animal protein as main component and being to be refrigerated or chilled for storage, **characterized in that** before said foodstuff is refrigerated or chilled, it is preheated to a temperature not less than the temperature at which protein is denatured and less than a cooking temperature.
